# EUROPEAN PATENT APPLICATION

(11) **EP 4 404 688 A1**
(43) Date of publication of application: **24.07.2024**
(21) Application number: 21957094.2
(22) Date of filing: 16.09.2021
(51) Int. Cl.: H04W 76/27, H04W 76/30, H04W 88/06

(54) **CAPABILITY REPORTING METHOD AND APPARATUS, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Kudlek, Franz Thomas
(86) International application number: PCT/CN2021/118878
(87) International publication number: WO 2023/039807

(57) **Abstract**

The present invention provides a capability reporting method, a capability reporting apparatus, and a storage medium. The capability reporting method includes: sending an RRC connection release capability supported and reported by a multi-SIM terminal to a base station. In the present invention, it achieves a purpose that the multi-SIM terminal reports the RRC connection release capability supported and reported by the multi-SIM terminal itself. Furthermore, it achieves a purpose of enabling the multi-SIM terminal to correctly request an RRC connection release based on a configuration of the base station, thereby having high availability.

## Description

### TECHNICAL FIELD

The present invention relates to the communication field, and in particular, to capability reporting methods, capability reporting apparatuses, and storage media.

### BACKGROUND

More and more multi-subscriber identity module (SIM) terminals appear as wireless communication technologies develop. Currently, the multi-SIM terminals generally work in corresponding modes implemented by various terminal manufactures, which introduces many different terminal operations and working modes (such as a dual-SIM single-standby type, a dual-SIM dual-standby and single-active type, and a dual-SIM dual-standby and dual-active type) and may bring out some problems. For example, during communicating with a first system, the multi-SIM terminal often has to switch its connection to a second system for some operations, such as paging monitoring, performing measurements, and reading system messages, which may affect the performance of the first system. However, without going to the second system to perform these operations, for example without the paging monitoring, the services of the second system may never be established. For certain operations, for example long time-consuming operations, the multi-SIM terminal is to release its radio resource control (RRC) connection with the first system. For certain operations, for example short time-consuming operations, the multi-SIM terminal is not to release its RRC connection with the first system.

At present, it is always on the terminal side to release the RRC connection of the multi-SIM terminal, without involving a network side.

### SUMMARY

In view of the above, examples of the present invention provide a capability reporting method, a capability reporting apparatus, and a storage medium.

According to a first aspect of the examples of the present invention, a capability reporting method is provided. The method is applicable to a multi-subscriber identity module (SIM) terminal, and includes:

sending a radio resource control (RRC) connection release capability supported and reported by the multi-SIM terminal to a base station.

Optionally, the RRC connection release capability supported and reported by the multi-SIM terminal includes at least one of:
a first capability, which is configured to indicate a target state supported and reported by the multi-SIM terminal, wherein the target state is an expected state to be switched to after the multi-SIM terminal performs an RRC connection release; a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, sending the RRC connection release capability supported and reported by the multi-SIM terminal to the base station includes:
sending the RRC connection release capability supported and reported by the multi-SIM terminal to the base station through a target information element in a terminal capability signaling.

Optionally, sending the RRC connection release capability supported and reported by the multi-SIM terminal to the base station through the target information element in the terminal capability signaling includes any one of:
sending the RRC connection release capability supported and reported by the multi-SIM terminal to the base station through the target information element in a *UE-EUTRA-Capability* signaling in response to determining that the base station is an evolution universal mobile telecommunications system (UMTS) terrestrial radio access network (E-UTRAN) base station; or
sending the RRC connection release capability supported and reported by the multi-SIM terminal to the base station through the target information element in a *UE-NR-Capability* signaling in response to determining that the base station is a new radio (NR) base station.

Optionally, the method further includes:
receiving configuration information sent by the base station, wherein the configuration information indicates at least target RRC connection release information that is expected to be reported by the multi-SIM terminal; and
sending the target RRC connection release information to the base station based on the configuration information.

Optionally, sending the target RRC connection release information to the base station includes:
sending the target RRC connection release information to the base station through a *UEAssistanceInformation* signaling.

Optionally, the configuration information further indicates at least one of:
whether the multi-SIM terminal is allowed to report at least one item of the target RRC connection release information; a condition for allowing the multi-SIM terminal to report the target RRC connection release information; a timing duration of a block timer, wherein the block timer is configured to block the multi-SIM terminal from reporting the target RRC connection release information until timing is over; and/or
an RRC connection release capability supported by the base station.

Optionally, the target RRC connection release information includes at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the method further includes:
determining to send to the base station no information related to performing an RRC connection release of the multi-SIM terminal in response to receiving no configuration information sent by the base station, wherein the configuration information indicates at least target RRC connection release information that is expected to be reported by the multi-SIM terminal.

According to a second aspect of the examples of the present invention, a capability reporting method is provided. The method is applicable to a base station, and includes:
receiving an RRC connection release capability supported and reported by a multi-SIM terminal from the multi-SIM terminal.

Optionally, the RRC connection release capability supported and reported by the multi-SIM terminal includes at least one of:
a first capability, which is configured to indicate a target state supported and reported by the multi-SIM terminal, wherein the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, the method further includes:
determining configuration information corresponding to the multi-SIM terminal based on the RRC connection release capability supported and reported by the multi-SIM terminal and an RRC connection release capability supported by the base station, wherein the configuration information indicates at least target RRC connection release information that is expected to be reported by the multi-SIM terminal;
sending the configuration information to the multi-SIM terminal; and
receiving the target RRC connection release information that is sent by the multi-SIM terminal based on the configuration information.

Optionally, determining the configuration information corresponding to the multi-SIM terminal based on the RRC connection release capability supported and reported by the multi-SIM terminal and the RRC connection release capability supported by the base station includes:
determining the configuration information corresponding to the multi-SIM terminal based on the RRC connection release capability supported and reported by the multi-SIM terminal in response to determining that the base station supports an RRC connection release.

Optionally, sending the configuration information to the multi-SIM terminal includes:
sending the configuration information to the multi-SIM terminal through an *OtherConfig* signaling.

Optionally, the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, wherein the block timer is configured to block the multi-SIM terminal from reporting the target RRC connection release information until timing is over; and/or
the RRC connection release capability supported by the base station.

Optionally, the target RRC connection release information includes at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the method further includes:
performing no step of determining the configuration information corresponding to the multi-SIM terminal based on the RRC connection release capability supported and reported by the multi-SIM terminal and the RRC connection release capability supported by the base station in response to determining that the base station does not support an RRC connection release.

According to a third aspect of the examples of the present invention, a capability reporting apparatus is provided. The apparatus is applicable to a multi-SIM terminal, and includes:
a first sending module, configured to send an RRC connection release capability supported and reported by the multi-SIM terminal to a base station.

Optionally, the RRC connection release capability supported and reported by the multi-SIM terminal includes at least one of:
a first capability, which is configured to indicate a target state supported and reported by the multi-SIM terminal, wherein the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, the first sending module is further configured to:
send the RRC connection release capability supported and reported by the multi-SIM terminal to the base station through a target information element in a terminal capability signaling.

Optionally, the first sending module is further configured to:
send the RRC connection release capability supported and reported by the multi-SIM terminal to the base station through the target information element in a *UE-EUTRA-Capability* signaling in response to determining that the base station is an E-UTRAN base station; or
send the RRC connection release capability supported and reported by the multi-SIM terminal to the base station through the target information element in a *UE-NR-Capability* signaling in response to determining that the base station is an NR base station.

Optionally, the apparatus further includes:
a second receiving module, configured to receive configuration information sent by the base station, wherein the configuration information indicates at least target RRC connection release information that is expected to be reported by the multi-SIM terminal; and
a second sending module, configured to send the target RRC connection release information to the base station based on the configuration information.

Optionally, the second sending module is further configured to:
send the target RRC connection release information to the base station through a *UEAssistanceInformation* signaling.

Optionally, the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, wherein the block timer is configured to block the multi-SIM terminal from reporting the target RRC connection release information until timing is over; and/or
an RRC connection release capability supported by the base station.

Optionally, the target RRC connection release information includes at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the apparatus further includes:
a processing module, configured to determine to send to the base station no information related to performing an RRC connection release of the multi-SIM terminal in response to receiving no configuration information sent by the base station, wherein the configuration information indicates at least target RRC connection release information that is expected to be reported by the multi-SIM terminal.

According to a fourth aspect of the examples of the present invention, a capability reporting apparatus is provided. The apparatus is applicable to a base station, and includes:
a first receiving module, configured to receive an RRC connection release capability supported and reported by a multi-SIM terminal from the multi-SIM terminal.

Optionally, the RRC connection release capability supported and reported by the multi-SIM terminal includes at least one of:
a first capability, which is configured to indicate a target state supported and reported by the multi-SIM terminal, wherein the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, the apparatus further includes:
a determining module, configured to determine configuration information corresponding to the multi-SIM terminal based on the RRC connection release capability supported and reported by the multi-SIM terminal and an RRC connection release capability supported by the base station, wherein the configuration information indicates at least target RRC connection release information that is expected to be reported by the multi-SIM terminal;
a third sending module, configured to send the configuration information to the multi-SIM terminal; and
a third receiving module, configured to receive the target RRC connection release information that is sent by the multi-SIM terminal based on the configuration information.

Optionally, the determining module is further configured to:
determine the configuration information corresponding to the multi-SIM terminal based on the RRC connection release capability supported and reported by the multi-SIM terminal and the RRC connection release capability supported by the base station in response to determining that the base station supports an RRC connection release.

Optionally, the third sending module is further configured to:
send the configuration information to the multi-SIM terminal through an *OtherConfig* signaling.

Optionally, the configuration information further indicates at least one of:
whether the multi-SIM terminal is allowed to report at least one item of the target RRC connection release information;
a condition for allowing the multi-SIM terminal to report the target RRC connection release information; a timing duration of a block timer, wherein the block timer is configured to block the multi-SIM terminal from reporting the target RRC connection release information until timing is over; and/or
the RRC connection release capability supported by the base station.

Optionally, the target RRC connection release information includes at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the apparatus further includes:
a controlling module, configured to control the determining module not to determine the configuration information corresponding to the multi-SIM terminal in response to determining that the base station does not support an RRC connection release.

According to a fifth aspect of the examples of the present invention, a computer-readable storage medium storing a computer program is provided. The computer program is configured to execute any one of the above capability reporting methods at a multi-SIM terminal side.

According to a sixth aspect of the examples of the present invention, a computer-readable storage medium storing a computer program is provided. The computer program is configured to execute any one of the above capability reporting methods at a base station side.

According to a seventh aspect of the examples of the present invention, a capability reporting apparatus is provided, including:
one or more processors; and
one or more memories for storing instructions executable by the one or more processors;
wherein the one or more processors are configured to perform any one of the above capability reporting methods at a multi-SIM terminal side.

According to an eighth aspect of the examples of the present invention, a capability reporting apparatus is provided, including:
one or more processors; and
one or more memories for storing instructions executable by the one or more processors;
wherein the one or more processors are configured to perform any one of the capability reporting methods at a base station side.

The technical solutions provided by the examples of the present invention may obtain the following beneficial effects.

In the examples of the present invention, a multi-SIM terminal can send an RRC connection release capability supported and reported by the multi-SIM terminal itself to a base station, so that the base station can determine configuration information corresponding to the multi-SIM terminal based on the RRC connection release capability supported by the base station itself and the RRC connection release capability supported and reported by the multi-SIM terminal, where the configuration information indicates at least target RRC connection release information that is expected to be reported by the multi-SIM terminal, and send the configuration information to the multi-SIM terminal. Therefore, the multi-SIM terminal can correctly perform an RRC connection release based on the configuration of the base station. In the present invention, the RRC connection release process of the multi-SIM terminal depends on both the capability of the multi-SIM terminal and the capability of the base station, thereby having high availability.

It is to be understood that the foregoing general description and the following detailed description are exemplary and explanatory only and are not restrictive of the present invention.

### BRIEF DESCRIPTION OF THE DRAWINGS

The accompanying drawings, which are incorporated in and constitute a part of the description, illustrate examples consistent with the present invention and, together with the description, serve to explain the principles of the present invention.
FIG. 1 illustrates a schematic flowchart of a capability reporting method according to an example.
FIG. 2 illustrates a schematic flowchart of another capability reporting method according to an example.
FIG. 3 illustrates a schematic flowchart of another capability reporting method according to an example.
FIG. 4 illustrates a schematic flowchart of another capability reporting method according to an example.
FIG. 5 illustrates a schematic flowchart of another capability reporting method according to an example.
FIG. 6 illustrates a schematic flowchart of another capability reporting method according to an example.
FIG. 7 illustrates a schematic flowchart of another capability reporting method according to an example.
FIG. 8 illustrates a block diagram of a capability reporting apparatus according to an example.
FIG. 9 illustrates a block diagram of another capability reporting apparatus according to an example.
FIG. 10 illustrates a schematic structure diagram of a capability reporting apparatus according to an example of the present invention.
FIG. 11 illustrates a schematic structure diagram of another capability reporting apparatus according to an example of the present invention.

### DETAILED DESCRIPTION OF THE EMBODIMENTS

Embodiments will be described in detail here with the examples thereof illustrated in the drawings. When the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a," "said" and "the" in their singular forms in the present invention and the appended claims are also intended to include their plural forms, unless clearly indicated otherwise in the context. It is also to be understood that the term "and/or" as used herein is and includes any and all possible combinations of at least one associated listed item.

It is to be understood that, although terms "first," "second," "third," and the like may be used in the present invention to describe various information, such information should not be limited to these terms. These terms are only used to distinguish the information of the same type with each other. For example, without departing from the scope of the present invention, first information may be referred as second information; and similarly, second information may also be referred as first information. Depending on the context, the word "if' as used herein may be interpreted as "when," "upon," or "in response to determining."

The capability reporting methods provided by the present invention is described first from a multi-subscriber identity module (SIM) terminal side.

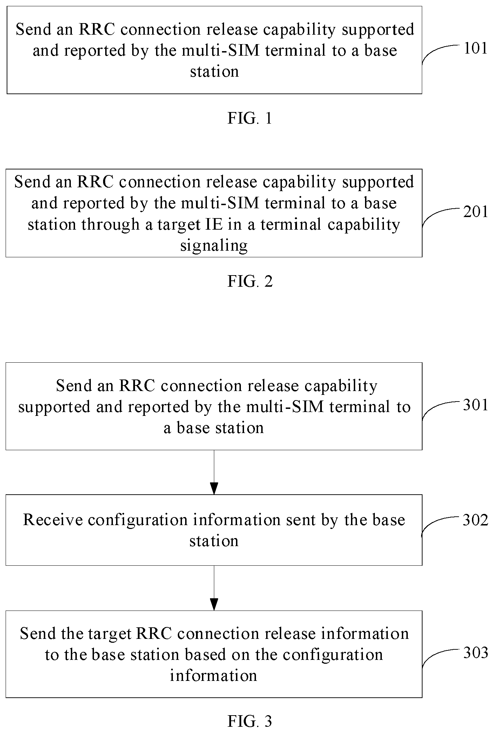

A capability reporting method is provided according to an example of the present invention, as illustrated in FIG. 1. FIG. 1 illustrates a flow chart of a capability reporting method according to the example, which is applicable to a multi-SIM terminal. The multi-SIM terminal refers to a device that supports the deployment of a plurality of SIMs. The method may include the following step.

At step 101, a radio resource control (RRC) connection release capability supported and reported by the multi-SIM terminal is sent to a base station.

In the example of the present invention, the base station may be a base station accessed via any one SIM of the multi-SIM terminal.

In the above example, it achieves a purpose that the multi-SIM terminal reports the RRC connection release capability supported and reported by the multi-SIM terminal itself to the base station, thereby having high availability.

In some optional examples, the RRC connection release capability supported and reported by the multi-SIM terminal includes but is not limited to at least one of the following: a first capability, which is configured to indicate a target state supported and reported by the multi-SIM terminal; a second capability, which is configured to indicate a reason for an RRC connection release supported and reported by the multi-SIM terminal; and/or a third capability, which is configured to indicate a communication protocol stratum on which the RRC connection release is performed supported and reported by the multi-SIM terminal.

In particular, the target state is an expected state to be switched to after the multi-SIM terminal performs the RRC connection release, which includes but is not limited to an inactive state or an idle state. The first capability refers to a capability of the multi-SIM terminal to support and report the target state, that is to say, the multi-SIM terminal informs the base station of its own release preference, and informs the base station of the state it expects to switch to after the RRC connection release, so that the base station makes a corresponding configuration and adjustment. The second capability refers to a capability of the multi-SIM terminal to support and report a reason for the RRC connection release, that is, the multi-SIM terminal informs the base station of the purpose of the RRC connection release supported by the terminal, such as that the multi-SIM terminal needs to transfer to and establish a connection on another communication system. The third capability refers to a capability of the multi-SIM terminal to support and report the specific communication protocol stratum on which the RRC connection release is performed. The communication protocol stratum for performing the RRC connection release includes but is not limited to an access stratum (AS) or a non-access stratum (NAS). For example, the multi-SIM terminal may inform the base station that the multi-SIM terminal supports and reports to perform the RRC connection release on the AS or the NAS.

In the above example, the multi-SIM terminal supports and reports the at least one capability on the RRC connection release, which is easy to be implemented and has high availability.

In some optional examples as illustrated in FIG. 2, FIG. 2 illustrates a flowchart of a capability reporting method according to an example. The method is applicable to a multi-SIM terminal and may include the following step.

At step 201, an RRC connection release capability supported and reported by the multi-SIM terminal is sent to a base station through a target information element (IE) in a terminal capability signaling.

In a possible implementation, the base station is an evolution universal mobile telecommunications system (UMTS) terrestrial radio access network (E-UTRAN) in a long term evolution (LTE) system.

The terminal capability signaling may specifically be a *UE-EUTRA-Capability* signaling. The target IE may be a newly added IE in the terminal capability signaling, including but not limited to a newly added IE *IRAT-ParametersNR-r17.* Alternatively, the target IE may be an existing IE in the terminal capability signaling.

Through the target IE newly added in the terminal capability signaling, the multi-SIM terminal may send the RRC connection release capability supported and reported by the multi-SIM terminal to the base station. Alternatively, the multi-SIM terminal takes one existing IE in the terminal capability signaling as the target IE and through the target IE, sends the RRC connection release capability supported and reported by the multi-SIM terminal to the base station.

In another possible implementation, the base station is a new radio (NR) base station in an NR system.

The terminal capability signaling may specifically be a *UE-NR-Capability* signaling. The target IE may be a newly added IE in the terminal capability signaling, or the target IE may be an existing IE in the terminal capability signaling. Through the target IE newly added in the terminal capability signaling, the multi-SIM terminal may send the RRC connection release capability supported and reported by the multi-SIM terminal to the base station. Alternatively, the multi-SIM terminal takes one existing IE in the terminal capability signaling as the target IE and through the target IE, sends the RRC connection release capability supported and reported by the multi-SIM terminal to the base station.

Taking an example where the multi-SIM terminal sends the RRC connection release capability supported and reported by the multi-SIM terminal to the base station through the newly added target IE in the *UE-NR-Capability* signaling, the implementation is as follows.

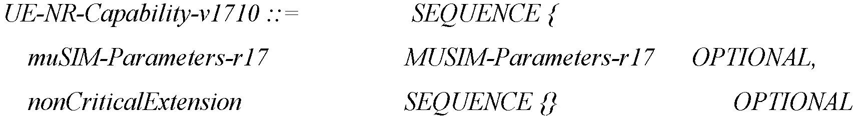

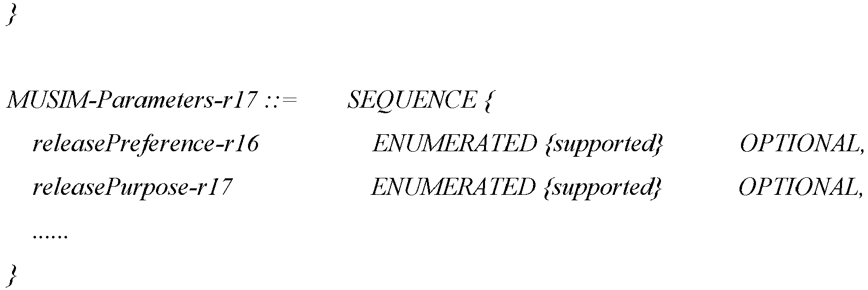

The above is only a description example. In practical applications, any manner in which the multi-SIM terminal sends the RRC connection release capability supported and reported by the multi-SIM terminal to the base station should fall within the protection scope of the present invention.

In the above example, through the target IE in the terminal capability information, the multi-SIM terminal may achieve a purpose of reporting the RRC connection release capability supported and reported by the multi-SIM terminal, thereby having high availability.

In some optional examples as illustrated in FIG. 3, FIG. 3 illustrates a flowchart of a capability reporting method according to an example. The method is applicable to a multi-SIM terminal and may include the following steps.

At step 301, an RRC connection release capability supported and reported by the multi-SIM terminal is sent to a base station.

At step 302, configuration information sent by the base station is received.

In the example of the present invention, the configuration information indicates at least target RRC connection release information that is expected to be reported by the multi-SIM terminal. That is, the configuration information indicates at least the specific RRC connection release information that is expected to be reported by the multi-SIM terminal.

At step 303, the target RRC connection release information is sent to the base station based on the configuration information.

In a possible implementation, the target RRC connection release information may be sent to the base station through a *UEAssistanceInformation* signaling. Specifically, the target RRC connection release information may be sent to the base station through a newly added IE in the *UEAssistanceInformation* signaling or by multiplexing an existing IE in the *UEAssistanceInformation* signaling. The IE may be specified by a protocol or be negotiated between the terminal and a network side device.

In the above examples, on the basis of the multi-SIM terminal capable of reporting the RRC connection release capability supported and reported by the multi-SIM terminal itself, the base station may send the configuration information to the multi-SIM terminal, and instruct the multi-SIM terminal to report the target RRC connection release information based on the configuration of the base station. Thus, it achieves a purpose that the multi-SIM terminal correctly reports the target RRC connection release information based on the configuration of the base station so as to request an RRC connection release, thereby having high availability.

In some optional examples, the target RRC connection release information indicated by the configuration information includes but is not limited to at least one of the following: target state information, where a target state is an expected state to be switched to after the multi-SIM terminal performs the RRC connection release; reason information that the multi-SIM terminal performs the RRC connection release; and/or communication protocol stratum information that the multi-SIM terminal performs the RRC connection release. The target state may be an inactive state or an idle state. The reason that the multi-SIM terminal performs the RRC connection release may include but not limited to that the multi-SIM terminal needs to switch its RRC connection to another system for operations, including but not limited to paging monitoring, performing measurements, and reading system messages. The communication protocol stratum on which the RRC connection release is performed includes but is not limited to an AS or a NAS.

Through the configuration information, the base station may indicate the specific RRC connection release information that is expected to be reported by the multi-SIM terminal. The multi-SIM terminal reports the target RRC connection release information based on the configuration information. For example, if the configuration information indicates that the multi-SIM terminal is expected to report the target state information and the communication protocol stratum information that the multi-SIM terminal performs the RRC connection release, the multi-SIM terminal reports the target state information indicating the inactive state, and the communication protocol stratum information that the multi-SIM terminal performs the RRC connection release on the AS.

Further, besides indicating the target RRC connection release information, the configuration information may also indicate at least one of the following: whether the multi-SIM terminal is allowed to report at least one item of the target RRC connection release information; a condition for allowing the multi-SIM terminal to report the target RRC connection release information; a timing duration of a block timer; and/or an RRC connection release capability supported by the base station. In particular, the configuration information may indicate whether the multi-SIM terminal is allowed to report the target state information, and/or, the configuration information may indicate whether the multi-SIM terminal is allowed to report the reason information, and/or, the configuration information may also indicate whether the multi-SIM terminal is allowed to report the communication protocol stratum information. Of course, the configuration information may also indicate whether to allow reporting the target RRC connection release information. That is, it indicates only whether the multi-SIM terminal is allowed to report the target RRC connection release information, without distinguishing the specific information content thereof.

The condition for allowing the multi-SIM terminal to report the target RRC connection release information includes but is not limited to at least one of the following: at least one first reason for allowing the multi-SIM terminal to report the target RRC connection release information; and/or at least one second reason for allowing the multi-SIM terminal to report the target state information; and/or at least one third reason for allowing the multi-SIM terminal to report the communication protocol stratum information.

The multi-SIM terminal may send the target RRC connection release information to the base station when determining that the at least one first reason indicated by the configuration information is satisfied. And/or, the multi-SIM terminal may send the target state information to the base station when determining that the at least one second reason indicated by the configuration information is satisfied. And/or, the multi-SIM terminal may send the communication protocol stratum information to the base station when determining that the at least one third reason indicated by the configuration information is satisfied.

The above are only description examples, and other conditions related to indicating the multi-SIM terminal to report the target RRC connection release information should fall within the protection scope of the present invention.

In an example of the present invention, the block timer is configured to block the multi-SIM terminal from reporting the target RRC connection release information until timing is over. In order to avoid problems such as signaling resource waste and excessive bandwidth occupation caused by frequently reporting the target RRC connection release information by the multi-SIM terminal, the configuration information provided in the present invention may also indicate the timing duration of the block timer. Assuming that the timing duration is t, the multi-SIM terminal may start the block timer after reporting the target RRC connection release information. The multi-SIM terminal is not to report the target RRC connection release information before the block timer expires, even if the condition for reporting the target RRC connection release information is met.

In the example of the present invention, the RRC connection release capability supported by the base station indicated in the configuration information specifically includes: supporting of the RRC connection release capability by the base station, non-supporting of the RRC connection release capability by the base station.

In the above example, through the configuration information, the base station may instruct the multi-SIM terminal to correctly report the target RRC connection release information, so that an RRC connection release process depends on both the capability of the multi-SIM terminal and the capability of the base station, thereby having high availability.

It is to be noted that the RRC connection release capability reported by the terminal is not limited to the above ones. The function that the terminal reports the RRC connection release capability supported and reported by the multi-SIM terminal is to assist the base station in sending the RRC connection release configuration. However, the final decision on how to configure lies with the base station. For example, the base station may configure for the terminal solely on the needs of the base station without considering the terminal's reporting at all, or configure for the terminal by considering the RRC connection release capability supported and reported by the multi-SIM terminal from the terminal.

In the case where the base station performs the configuration by considering the RRC connection release capability supported and reported by the multi-SIM terminal, the specific information content of the target RRC connection release information configured by the base station and the RRC connection release capability reported by the terminal may or may not completely match. That is, the network side device may configure the target RRC connection release information according to both the supported and reported RRC connection release capability sent by the multi-SIM terminal and the service needs of the base station. For example, the supported and reported RRC connection release capability sent by the multi-SIM terminal includes a first capability that the multi-SIM terminal supports and reports the target state, and a second capability that the multi-SIM terminal supports and reports the reason for the RRC connection release. The target RRC connection release information configured by the base station may include the target state information and the reason information, or may only include one of the target state information and the reason information, which is not limited in the present invention.

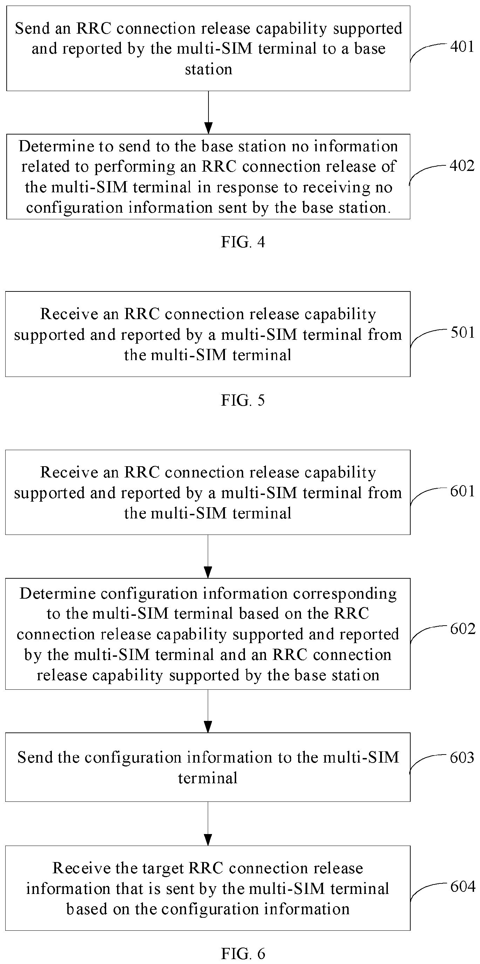

In some optional examples as illustrated in FIG. 4, FIG. 4 illustrates a flowchart of a capability reporting method according to an example. The method is applicable to a multi-SIM terminal and may include the following steps.

At step 401, an RRC connection release capability supported and reported by the multi-SIM terminal is sent to a base station.

At step 402, it is determined to send to the base station no information related to performing an RRC connection release of the multi-SIM terminal in response to receiving no configuration information sent by the base station.

In the example of the present invention, the configuration information indicates at least target RRC connection release information that is expected to be reported by the multi-SIM terminal. Without receiving the configuration information sent by the base station within a preset period after sending the RRC connection release capability supported and reported by the multi-SIM terminal, the multi-SIM terminal may determines that no information related to performing the RRC connection release of the multi-SIM terminal is to be sent to the base station.

In the above example, if the multi-SIM terminal determines that no configuration information sent by the base station is received after reporting the RRC connection release capability supported and reported by the multi-SIM terminal, it may not report any information related to performing the RRC connection release of the multi-SIM terminal to the base station subsequently, which saves signaling resources and has high availability.

Next, the capability reporting method provided by the present invention is to be described from a base station side.

A capability reporting method is provided in an example of the present invention, as illustrated in FIG. 5. FIG. 5 illustrates a flow chart of a capability reporting method according to the example, which is applicable to a base station. The method may include the following step.

At step 501, an RRC connection release capability supported and reported by a multi-SIM terminal is received from the multi-SIM terminal.

In the above example, the base station may receive the RRC connection release capability supported and reported by the multi-SIM terminal and sent by the multi-SIM terminal, thereby having high availability.

In some optional examples, the RRC connection release capability supported and reported by the multi-SIM terminal includes at least one of the following: a first capability, which is configured to indicate a target state supported and reported by the multi-SIM terminal, where the target state is an expected state to be switched to after the multi-SIM terminal performs an RRC connection release; a second capability, which is configured to indicate a reason for the RRC connection release supported and reported by the multi-SIM terminal; and/or a third capability, which is configured to indicate a communication protocol stratum on which the RRC connection release is performed supported and reported by the multi-SIM terminal.

A capability reporting method is provided in an example of the present invention, as illustrated in FIG. 6. FIG. 6 illustrates a flow chart of a capability reporting method according to the example, which is applicable to a base station. The method may include the following steps.

At step 601, an RRC connection release capability supported and reported by a multi-SIM terminal is received from the multi-SIM terminal.

At step 602, configuration information corresponding to the multi-SIM terminal is determined based on the RRC connection release capability supported and reported by the multi-SIM terminal and an RRC connection release capability supported by the base station.

In the example of the present invention, the configuration information indicates at least target RRC connection release information that is expected to be reported by the multi-SIM terminal.

In a possible implementation, the base station may determine the configuration information in the case of determining that it supports an RRC connection release.

At step 603, the configuration information is sent to the multi-SIM terminal.

In a possible implementation, the base station may send the configuration information to the multi-SIM terminal through an *OtherConfig* signaling. Specifically, the base station may add a new IE in the *OtherConfig* signaling, and thereby add the configuration information to the new IE. Alternatively, the base station may multiplex an existing IE in the *OtherConfig* signaling, so as to send the configuration information to the multi-SIM terminal.

At step 604, the target RRC connection release information that is sent by the multi-SIM terminal based on the configuration information is received.

In the above example, the base station may first receive the RRC connection release capability supported and reported by the multi-SIM terminal from the multi-SIM terminal. Further, the base station determines the configuration information corresponding to the multi-SIM terminal based on both the RRC connection release capability supported by the base station itself and the RRC connection release capability supported and reported by the multi-SIM terminal, and sends the configuration information to the multi-SIM terminal, so that the multi-SIM terminal can report the target RRC connection release information based on the configuration information. The present invention achieves a purpose of enabling the multi-SIM terminals to correctly request the RRC connection release based on the configuration of the base station, thereby having high availability.

In some optional examples, the target RRC connection release information indicated by the configuration information includes at least one of the following: target state information, where a target state is an expected state to be switched to after the multi-SIM terminal performs the RRC connection release; reason information that the multi-SIM terminal performs the RRC connection release; and/or communication protocol stratum information that the multi-SIM terminal performs the RRC connection release.

The target state includes but is not limited to an inactive state or an idle state. The reason that the multi-SIM terminal performs the RRC connection release may include but not limited to that the multi-SIM terminal need to switch its RRC connection to another system for operations, including but not limited to paging monitoring, performing measurements, and reading system messages. The communication protocol stratum on which the multi-SIM terminal performs the RRC connection release includes but is not limited to an AS or a NAS.

Besides indicating the target RRC connection release information, the configuration information may also indicate at least one of the following: whether the multi-SIM terminal is allowed to report at least one item of the target RRC connection release information; a condition for allowing the multi-SIM terminal to report the target RRC connection release information; a timing duration of a block timer; and/or the RRC connection release capability supported by the base station.

In particular, the configuration information may indicate whether the multi-SIM terminal is allowed to report the target state information, and/or, the configuration information may indicate whether the multi-SIM terminal is allowed to report the reason information, and/or, the configuration information may indicate whether the multi-SIM terminal is allowed to report the communication protocol stratum information. Of course, the configuration information may indicate whether to allow reporting the target RRC connection release information. That is, it indicates only whether the multi-SIM terminal is allowed to report the target RRC connection release information, without distinguishing the specific information content thereof.

The condition for allowing the multi-SIM terminal to report the target RRC connection release information includes at least one of the following: at least one first reason for allowing the multi-SIM terminal to report the target RRC connection release information; at least one second reason for allowing the multi-SIM terminal to report the target state information; and/or at least one third reason for allowing the multi-SIM terminal to report the communication protocol stratum information. The block timer is configured to block the multi-SIM terminal from reporting the target RRC connection release information until timing is over. The RRC connection release capability supported by the base station specifically includes: supporting of the RRC connection release capability by the base station, non-supporting of the RRC connection release capability by the base station.

In some optional examples, if the base station determines that it does not support the RRC connection release, for example, the base station may be upgrading the system and have no capability to support the RRC connection release, it may not perform the above step 502, that is, it is not to determine the configuration information corresponding to the multi-SIM terminal. Of course, it is not to send the configuration information to the multi-SIM terminal. If the multi-SIM terminal determines that no configuration information is received, it sends no information related to performing the RRC connection release of the multi-SIM terminal to the base station.

In the above example, the base station neither performs the step of determining the configuration information corresponding to the multi-SIM terminal nor sending the configuration information to the multi-SIM terminal on the basis of determining that it does not support the RRC connection release, while the multi-SIM terminal is not to send the information related to performing the RRC connection release of the multi-SIM terminal to the base station, which saves signaling resources and has high availability.

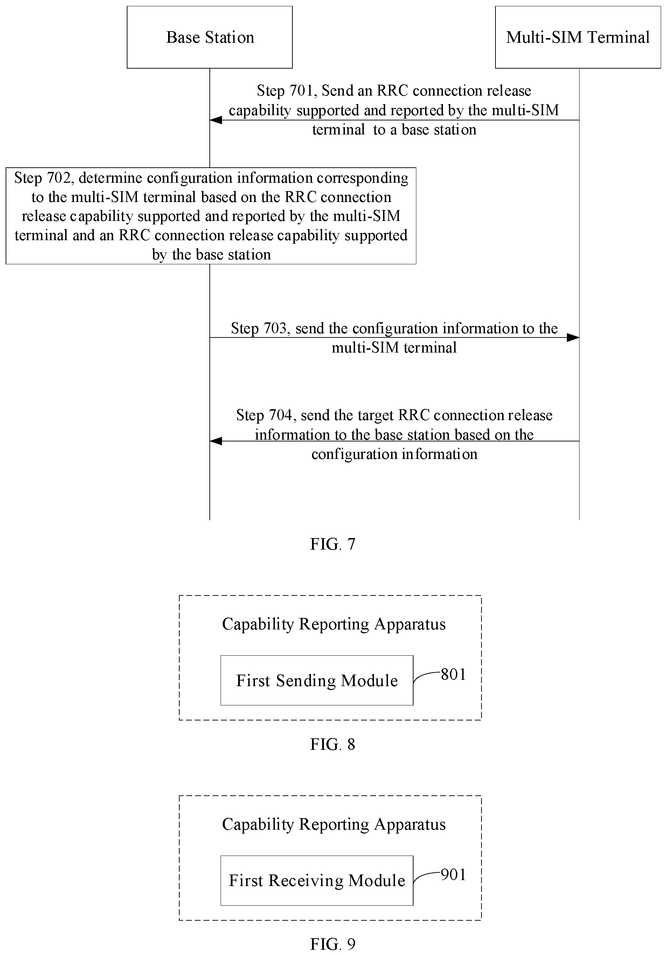

In some optional examples as illustrated in FIG. 7, FIG. 7 illustrates a flowchart of a capability reporting method according to an example. The method may include the following steps.

At step 701, an RRC connection release capability supported and reported by a multi-SIM terminal is sent from the multi-SIM terminal to a base station.

The RRC connection release capability supported and reported by the multi-SIM terminal includes at least one of the following: a first capability, which is configured to indicate a target state supported and reported by the multi-SIM terminal, where the target state is an expected state to be switched to after the multi-SIM terminal performs an RRC connection release; a second capability, which is configured to indicate a reason for the RRC connection release supported and reported by the multi-SIM terminal; and/or a third capability, which is configured to indicate a communication protocol stratum on which the RRC connection release is performed supported and reported by the multi-SIM terminal.

At step 702, the base station determines configuration information corresponding to the multi-SIM terminal based on the RRC connection release capability supported and reported by the multi-SIM terminal and an RRC connection release capability supported by the base station.

The base station may determine the configuration information when determining that it supports the RRC connection release.

The configuration information indicates at least target RRC connection release information that is expected to be reported by the multi-SIM terminal. The target RRC connection release information includes at least one of the following: target state information, where the target state is the expected state to be switched to after the multi-SIM terminal performs the RRC connection release; reason information that the multi-SIM terminal performs the RRC connection release; and/or communication protocol stratum information that the multi-SIM terminal performs the RRC connection release.

The configuration information also indicates at least one of the following: whether the multi-SIM terminal is allowed to report at least one item of the target RRC connection release information; a condition for allowing the multi-SIM terminal to report the target RRC connection release information; a timing duration of a block timer, where the block timer is configured to block the multi-SIM terminal from reporting the target RRC connection release information until timing is over; and/or the RRC connection release capability supported by the base station.

The condition for allowing the multi-SIM terminal to report the target RRC connection release information includes at least one of the following: at least one first reason for allowing the multi-SIM terminal to report the target RRC connection release information; at least one second reason for allowing the multi-SIM terminal to report the target state information; and/or at least one third reason for allowing the multi-SIM terminal to report the communication protocol stratum information.

At step 703, the base station sends the configuration information to the multi-SIM terminal.

At step 704, the multi-SIM terminal sends the target RRC connection release information to the base station based on the configuration information.

In the above example, it achieves a purpose of enabling the multi-SIM terminals to correctly request the RRC connection release based on the configuration of the base station, thereby having high availability.

In some optional examples,
after completing step 701, the base station does not perform subsequent steps in response to determining that it does not support the RRC connection release. That is, the base station is not to determine the configuration information corresponding to the multi-SIM terminal, and is not to send the configuration information to the multi-SIM terminal. The multi-SIM terminal is not to send the information related to performing the RRC connection release of the multi-SIM terminal to the base station.

In the above example, signaling resources are saved during the RRC connection release process of the multi-SIM terminal, thereby having high availability.

Corresponding to the foregoing method examples implementing the application functions, the present invention further provides apparatus examples implementing the application functions.

In referring to FIG. 8, which illustrates a block diagram of a capability reporting apparatus according to an example, the apparatus is applicable to a multi-SIM terminal and includes:
a first sending module 801 that is configured to send an RRC connection release capability supported and reported by the multi-SIM terminal to a base station.

Optionally, the RRC connection release capability supported and reported by the multi-SIM terminal includes at least one of:
a first capability, which is configured to indicate a target state supported and reported by the multi-SIM terminal, where the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, the first sending module is further configured to:
send the RRC connection release capability supported and reported by the multi-SIM terminal to the base station through a target IE in a terminal capability signaling.

Optionally, the first sending module is further configured to:
send the RRC connection release capability supported and reported by the multi-SIM terminal to the base station through a target IE in a *UE-EUTRA-Capability* signaling in response to determining that the base station is an E-UTRAN base station; or
send the RRC connection release capability supported and reported by the multi-SIM terminal to the base station through a target IE in a *UE-NR-Capability* signaling in response to determining that the base station is an NR base station.

Optionally, the apparatus further includes:
a second receiving module that is configured to receive configuration information sent by the base station, where the configuration information indicates at least target RRC connection release information that is expected to be reported by the multi-SIM terminal; and
a second sending module that is configured to send the target RRC connection release information to the base station based on the configuration information.

Optionally, the second sending module is further configured to:
send the target RRC connection release information to the base station through a *UEAssistanceInformation* signaling.

Optionally, the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, where the block timer is configured to block the multi-SIM terminal from reporting the target RRC connection release information until timing is over; and/or
an RRC connection release capability supported by the base station.

Optionally, the target RRC connection release information includes at least one of:
target state information, where the target state is the expected state to be switched to after the multi-SIM terminal performs an RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the apparatus further includes:
a processing module, configured to determine to send to the base station no information related on performing the RRC connection release of the multi-SIM terminal in response to receiving no configuration information sent by the base station. The configuration information indicates at least the target RRC connection release information that is expected to be reported by the multi-SIM terminal.

In referring to FIG. 9, which illustrates a block diagram of a capability report apparatus according to an example. The apparatus is applicable to a base station, and includes:
a first receiving module 901 that is configured to receive an RRC connection release capability supported and reported by a multi-SIM terminal, from the multi-SIM terminal.

Optionally, the RRC connection release capability supported and reported by the multi-SIM terminal includes at least one of:
a first capability, which is configured to indicate a target state supported and reported by the multi-SIM terminal, where the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

Optionally, the apparatus further includes:
a determining module, configured to determine configuration information corresponding to the multi-SIM terminal based on the RRC connection release capability supported and reported by the multi-SIM terminal and an RRC connection release capability supported by the base station, where the configuration information indicates at least target RRC connection release information that is expected to be reported by the multi-SIM terminal;
a third sending module, configured to send the configuration information to the multi-SIM terminal; and
a third receiving module, configured to receive the target RRC connection release information that is sent by the multi-SIM terminal based on the configuration information.

Optionally, the determining module is further configured to:
determine the configuration information corresponding to the multi-SIM terminal based on the RRC connection release capability supported and reported by the multi-SIM terminal and the RRC connection release capability supported by the base station in response to determining that the base station supports the RRC connection release.

Optionally, the third sending module is further configured to:
send the configuration information to the multi-SIM terminal through an *OtherConfig* signaling.

Optionally, the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, where the block timer is configured to block the multi-SIM terminal from reporting the target RRC connection release information until timing is over; and/or
the RRC connection release capability supported by the base station.

Optionally, the target RRC connection release information includes at least one of:
target state information, where the target state is the expected state to be switched to after the multi-SIM terminal performs the RRC connection release;
reason information that the multi-SIM terminal performs the RRC connection release; and/or
communication protocol stratum information that the multi-SIM terminal performs the RRC connection release.

Optionally, the condition for allowing the multi-SIM terminal to report the target RRC connection release information includes at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

Optionally, the apparatus further includes:
A controlling module, configured to control the determining module not to determine the configuration information corresponding to the multi-SIM terminal in response to determining that the base station does not support the RRC connection release.

For the apparatus embodiments, since they basically correspond to the method embodiments, reference may be made to the partial descriptions of the method embodiments for related parts. The apparatus examples described above are merely illustrative, in which the units described as separate components may or may not be physically separated, and the components displayed as the units may or may not be physical units, that is, may be located in one place or distributed to a plurality of units in a network. Some or all of the modules may be selected according to actual needs to achieve the purpose of the implementations of the present invention. It can be understood and implemented by those of ordinary skill in the art without any creative effort.

Accordingly, the present invention also provides a computer-readable storage medium storing a computer program, and the computer program is configured to execute any one of the above capability reporting methods applicable to the multi-SIM terminal side.

Accordingly, the present invention also provides a computer-readable storage medium storing a computer program, and the computer program is configured to execute any one of the above capability reporting methods applicable to the base station side.

Correspondingly, the present invention also provides a capability reporting apparatus, including:
one or more processors; and
one or more memories for storing instructions executable by the one or more processors.

The one or more processors are configured to perform any one of the above capability reporting methods at a multi-SIM terminal side.

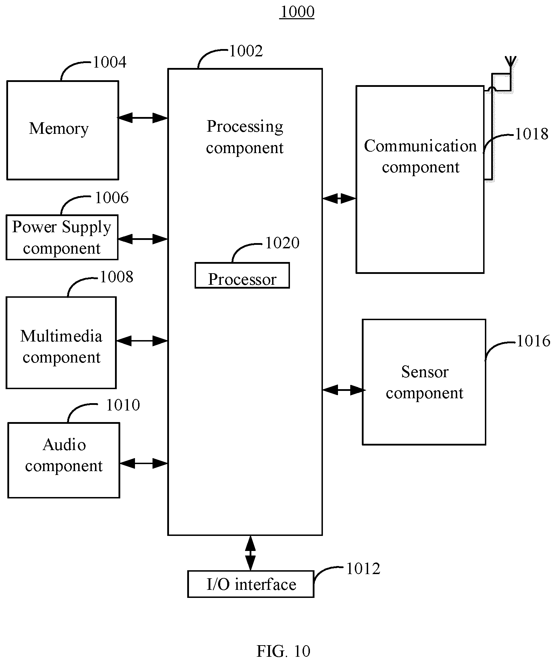

FIG. 10 illustrates a block diagram of a capability reporting apparatus 1000 according to an example. For example, the apparatus 1000 may be a multi-SIM terminal including a plurality of SIMs, such as a mobile phone, a tablet, an e-book reader, a multimedia player, a wearable device, an in-vehicle terminal, an ipad, a smart TV.

In referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1016, and a communication component 1018.

The processing component 1002 generally controls the overall operations of the apparatus 1000, such as operations associated with display, phone calls, data communications, camera operations, and recording operations. The processing component 1002 may include one or more processors 1020 to execute instructions to complete all or a part of the steps of the above capability reporting methods. In addition, the processing component 1002 may include one or more modules which facilitate the interaction between the processing component 1002 and other components. As an example, the processing component 1002 may include a multimedia module to facilitate the interaction between the multimedia component 1008 and the processing component 1002. As another example, the processing component 1002 may read executable instructions from one or more memories to implement the steps of the capability reporting method provided by each of the above examples.

The memory 1004 is configured to store various types of data to support the operations of the apparatus 1000. Examples of such data include instructions for any application or method operated on the apparatus 1000, contact data, phonebook data, messages, pictures, videos, and the like. The memory 1004 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1006 provides power for various components of the apparatus 1000. The power supply component 1006 may include a power management system, one or more power supplies, and other components associated with generating, managing, and distributing power for the apparatus 1000.

The multimedia component 1008 includes a screen providing an output interface between the apparatus 1000 and a user. In some embodiments, the multimedia component 1008 includes a front-facing camera and/or a rear-facing camera. The front camera and/or rear camera may receive external multimedia data when the apparatus 1000 is in an operating mode, such as a photographing mode or a video mode. Each front camera and rear camera may be a fixed optical lens system or have focal length and optical zooming capability.

The audio component 1010 is configured to output and/or input audio signals. For example, the audio component 1010 includes a microphone (MIC) that is configured to receive an external audio signal when the apparatus 1000 is in an operating mode, such as a call mode, a recording mode, and a voice recognition mode. The received audio signal may be further stored in memory 1004 or transmitted via communication component 1018. In some examples, the audio component 1010 also includes a speaker for outputting audio signals.

The I/O interface 1012 provides an interface between the processing component 1002 and a peripheral interface module. The above peripheral interface module may be a keyboard, a click wheel, buttons, or the like. These buttons may include but not limited to a home button, a volume button, a start button and a lock button.

The sensor component 1016 includes one or more sensors to provide the apparatus 1000 with status assessments in various aspects. For example, the sensor component 1016 may detect an open/closed state of the apparatus 1000 and a relative positioning of components such as the display and keypad of the apparatus 1000, and the sensor component 1016 can also detect a change in position of the apparatus 1000 or a component of the apparatus 1000, the presence or absence of user contact with the apparatus 1000, orientation or acceleration/deceleration of the apparatus 1000, and temperature change of the apparatus 1000. The sensor component 1016 may include a proximity sensor configured to detect the presence of a nearby object without any physical contact. The sensor component 1016 may further include an optical sensor, such as a complementary metal-oxide-semiconductor (CMOS) or charged coupled device (CCD) image sensor which is used in imaging applications. In some examples, the sensor component 1016 may also include an acceleration sensor, a gyro sensor, a magnetic sensor, a pressure sensor, or a temperature sensor.

The communication component 1018 is configured to facilitate wired or wireless communication between the apparatus 1000 and other devices. The apparatus 1000 may access a wireless network based on a communication standard, such as Wi-Fi, 2G, 3G, 4G, 5G, 6G, or a combination thereof. In an example, the communication component 1018 receives broadcast signals or broadcast related information from an external broadcast management system via a broadcast channel. In an example, the communication component 1018 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the apparatus 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing any one of the above capability reporting methods at the multi-SIM terminal side.

In one or more examples, there is also provided a non-transitory computer-readable storage medium including instructions, such as the memory 1004 including instructions. These instructions may be executed by the one or more processors 1020 of the apparatus 1000 to complete the above capability reporting methods. For example, the non-transitory computer-readable storage medium may be ROM, random access memory (RAM), CD-ROM, magnetic tape, floppy disk, optical data storage device, and the like.

Correspondingly, the present invention also provides a capability reporting apparatus, including:
one or more processors; and
one or more memories for storing instructions executable by the one or more processors.

The one or more processors are configured to perform any one of the capability reporting methods at a base station side.

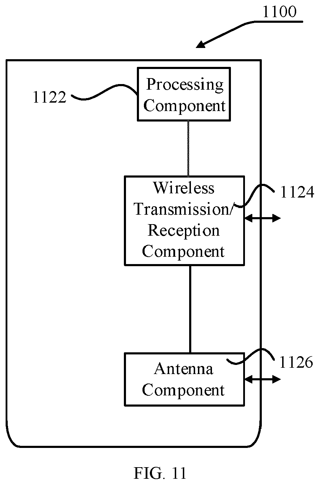

As illustrated in FIG. 11, FIG. 11 illustrates a schematic structure diagram of a capability reporting apparatus 1100 according to an example. The apparatus 1100 may be provided as a base station. In referring to FIG. 11, the apparatus 1100 includes a processing component 1122, a wireless transmission/reception component 1124, an antenna component 1126, and a signal processing part peculiar to a wireless interface. The processing component 1122 may further include at least one processor.

One of the processors in the processing component 1122 may be configured to perform any one of the above capability reporting methods.

Other implementations of the present invention will be readily apparent to those skilled in the art after implementing the present invention by referring to the description. The present invention is intended to cover any variations, uses, or adaptations of the present invention that are in accordance with the general principles thereof and include common general knowledge or conventional technical means in the art that are not disclosed in the present invention. The description and the examples are only illustrative, and the scope and spirit of the present invention are to be indicated by appended claims.

It should be understood that the present invention is not limited to the above-described accurate structures illustrated in the drawings, and various modifications and changes can be made to the present invention without departing from the scope thereof. The scope of the present invention is to be limited only by the appended claims.

## Claims

1. A capability reporting method, being applicable to a multi-subscriber identity module, SIM, terminal, comprising:
sending a radio resource control, RRC, connection release capability supported and reported by the multi-SIM terminal to a base station.

2. The method according to claim 1, wherein the RRC connection release capability supported and reported by the multi-SIM terminal comprises at least one of:
a first capability, which is configured to indicate a target state supported and reported by the multi-SIM terminal, wherein the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

3. The method according to claim 1, wherein sending the RRC connection release capability supported and reported by the multi-SIM terminal to the base station comprises:
sending the RRC connection release capability supported and reported by the multi-SIM terminal to the base station through a target information element in a terminal capability signaling.

4. The method according to claim 3, wherein sending the RRC connection release capability supported and reported by the multi-SIM terminal to the base station through the target information element in the terminal capability signaling comprises any one of:
sending the RRC connection release capability supported and reported by the multi-SIM terminal to the base station through the target information element in a *UE-EUTRA-Capability* signaling in response to determining that the base station is an evolution universal mobile telecommunications system, UMTS, terrestrial radio access network, E-UTRAN, base station; or
sending the RRC connection release capability supported and reported by the multi-SIM terminal to the base station through the target information element in a *UE-NR-Capability* signaling in response to determining that the base station is a new radio, NR, base station.

5. The method according to claim 1, further comprising:
receiving configuration information sent by the base station, wherein the configuration information indicates at least target RRC connection release information that is expected to be reported by the multi-SIM terminal; and
sending the target RRC connection release information to the base station based on the configuration information.

6. The method according to claim 5, wherein sending the target RRC connection release information to the base station comprises:
sending the target RRC connection release information to the base station through a *UEAssistanceInformation* signaling.

7. The method according to claim 5 or 6, wherein the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, wherein the block timer is configured to block the multi-SIM terminal from reporting the target RRC connection release information until timing is over; and/or
an RRC connection release capability supported by the base station.

8. The method according to claim 7, wherein the target RRC connection release information comprises at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

9. The method according to claim 8, wherein the condition for allowing the multi-SIM terminal to report the target RRC connection release information comprises at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

10. The method according to claim 1, further comprising:
determining to send to the base station no information related to performing an RRC connection release of the multi-SIM terminal in response to receiving no configuration information sent by the base station, wherein the configuration information indicates at least target RRC connection release information that is expected to be reported by the multi-SIM terminal.

11. A capability reporting method, being applicable to a base station, comprising:
receiving a radio resource control, RRC, connection release capability supported and reported by a multi-subscriber identity module, SIM, terminal from the multi-SIM terminal.

12. The method according to claim 11, wherein the RRC connection release capability supported and reported by the multi-SIM terminal comprises at least one of:
a first capability, which is configured to indicate a target state supported and reported by the multi-SIM terminal, wherein the target state is an expected state to be switched to after the multi-SIM terminal performs an RRC connection release;
a second capability, which is configured to indicate a reason for the RRC connection release supported and reported by the multi-SIM terminal; and/or
a third capability, which is configured to indicate a communication protocol stratum on which the RRC connection release is performed supported and reported by the multi-SIM terminal.

13. The method according to claim 11, further comprising:
determining configuration information corresponding to the multi-SIM terminal based on the RRC connection release capability supported and reported by the multi-SIM terminal and an RRC connection release capability supported by the base station, wherein the configuration information indicates at least target RRC connection release information that is expected to be reported by the multi-SIM terminal;
sending the configuration information to the multi-SIM terminal; and
receiving the target RRC connection release information that is sent by the multi-SIM terminal based on the configuration information.

14. The method according to claim 13, wherein determining the configuration information corresponding to the multi-SIM terminal based on the RRC connection release capability supported and reported by the multi-SIM terminal and the RRC connection release capability supported by the base station comprises:
determining the configuration information corresponding to the multi-SIM terminal based on the RRC connection release capability supported and reported by the multi-SIM terminal in response to determining that the base station supports an RRC connection release.

15. The method according to claim 13, wherein sending the configuration information to the multi-SIM terminal comprises:
sending the configuration information to the multi-SIM terminal through an *OtherConfig* signaling.

16. The method according to any one of claim 13-15, wherein the configuration information further indicates at least one of:
whether the multi-SIM terminal is allowed to report at least one item of the target RRC connection release information;
a condition for allowing the multi-SIM terminal to report the target RRC connection release information;
a timing duration of a block timer, wherein the block timer is configured to block the multi-SIM terminal from reporting the target RRC connection release information until timing is over; and/or
the RRC connection release capability supported by the base station.

17. The method according to claim 16, wherein the target RRC connection release information comprises at least one of:
target state information, wherein a target state is an expected state to be switched to after the multi-SIM terminal performs an RRC connection release;
reason information that the multi-SIM terminal performs the RRC connection release; and/or
communication protocol stratum information that the multi-SIM terminal performs the RRC connection release.

18. The method according to claim 17, wherein the condition for allowing the multi-SIM terminal to report the target RRC connection release information comprises at least one of:
at least one first reason for allowing the multi-SIM terminal to report the target RRC connection release information;
at least one second reason for allowing the multi-SIM terminal to report the target state information; and/or
at least one third reason for allowing the multi-SIM terminal to report the communication protocol stratum information.

19. The method according to claim 13, further comprising:
performing no step of determining the configuration information corresponding to the multi-SIM terminal based on the RRC connection release capability supported and reported by the multi-SIM terminal and the RRC connection release capability supported by the base station in response to determining that the base station does not support an RRC connection release.

20. A capability reporting apparatus, being applicable to a multi-subscriber identity module, SIM, terminal, comprising:
a first sending module, configured to send a radio resource control, RRC, connection release capability supported and reported by the multi-SIM terminal to a base station.

21. A capability reporting apparatus, being applied to a base station, comprising:
a first receiving module, configured to receive a radio resource control, RRC, connection release capability supported and reported by a multi- subscriber identity module, SIM, terminal from the multi-SIM terminal.

22. A computer-readable storage medium storing a computer program, wherein the computer program is configured to execute the capability reporting method according to any one of claims 1-10.

23. A computer-readable storage medium storing a computer program, wherein the computer program is configured to execute the capability reporting method according to any one of claims 11-19.

24. A capability reporting apparatus, comprising:
one or more processors; and
one or more memories for storing instructions executable by the one or more processors;
wherein the one or more processors are configured to perform the capacity reporting method according to any one of claims 1-10.

25. A capability reporting apparatus, comprising:
one or more processors; and
one or more memories for storing instructions executable by the one or more processors;
wherein the one or more processors are configured to perform the capacity reporting method according to any one of claims 11-19.
